# EUROPEAN PATENT APPLICATION

(11) **EP 2 858 310 A1**
(43) Date of publication of application: **08.04.2015**
(21) Application number: 13306382.6
(22) Date of filing: 07.10.2013
(51) Int. Cl.: H04L 12/58

(54) **Association of a social network message with a related multimedia flow**

(71) Applicant: ALCATEL LUCENT, 92100 Boulogne-Billancourt (FR)
(72) Inventor: Hebbar, Abdelkrim, 91620 NOZAY (FR); Picault, Jérome, 91620 NOZAY (FR); Ribiere, Myriam, 91620 NOZAY (FR); Gaste, Yann, 91620 NOZAY (FR)
(74) Representative: Mouney, Jérôme

(57) **Abstract**

For an association of a social network message written by a user in a social device (SD) with a related multimedia flow received by a broadcast receiver device (BRD), a correlation device (CD) detects the presence of the broadcast receiver device (BRD) receiving a multimedia flow in the same location as the social device (SD), extracts social keywords (SK) from a social message written by the user, requests the broadcast receiver device (BRD) for metadata about the received multimedia flow and extracting multimedia keywords (MK) from the metadata of the multimedia flow, provides a correlation coefficient (CoC) as a result of a probabilistic measure between the multimedia keywords (MK) and the social keywords (SK), and retrieves an identifier (OH) of a social network thread associated with the multimedia flow.

If the correlation coefficient (CoC) is greater than a first predefined threshold, the retrieved identifier is added to the text of the social message.

## Description

### FIELD OF THE INVENTION

The present invention pertains to a mechanism for association of a social network message with a related multimedia flow.

### BACKGROUND

Social media services and micro blogging applications are changing the way in which many people consume traditional broadcast media. Real-time backchannel conversations are now common-place as people simultaneously watch TV whilst using social media to broadcast their own thoughts, sentiments, opinions and emotions related to what they are watching.

Yet, content analysis of social interactions such as social network threads may be a good approach for enriching knowledge about multimedia contents. The study of the content of social interactions associated with a multimedia flow can contribute to:
- Increase knowledge about the multimedia content: people often speak about what is happening in the multimedia content (events, people, places, etc.). This can be used to enrich the multimedia description, but also express various viewpoints, helpful to categorize the acquired knowledge with different levels of expressiveness.
- Extend the content by creating semantic links to other pieces of content (on the basis of similarities of interactions). This will let people discover alternative multimedia resources through other people's conversations.

Today, the link between a social annotation thread and a TV program is done by the means of a so-called "hashtag", such as "#obama_election", which is manually entered as an element of the message by users of microblogging applications.

In the worst case, hashtags are generated by users themselves, which results in a large diversity and heterogeneity of identifications of social threads in relationship with a TV program.

In the best case, an "official" hashtag is provided during the TV program by the broadcaster, but this is not a guarantee of uniqueness.

Moreover, an hashtag is used to mark individual messages as belonging to a particular topic or "channel", without any information of time. In other word, a hashtag will never die: it will be available and used in the same way whatever the lifecycle of the topic or event it is related to.

Therefore, there is a need to seamlessly associate a media content with the social interactions generated by the socially active viewers of the media content.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for an association of a social network message written by a user in a social device with a related multimedia flow received by a broadcast receiver device, comprising the following steps in a correlation device able to communicate with the social device and the broadcast receiver device:
detecting the presence of the broadcast receiver device receiving a multimedia flow in the same location as the social device (SD),
extracting social keywords from a social message written by the user,
requesting the broadcast receiver device for metadata about the received multimedia flow and extracting multimedia keywords from the metadata of the multimedia flow,
providing a correlation coefficient as a result of a probabilistic measure between the multimedia keywords and the social keywords (SK),
retrieving an identifier of a social network thread associated with the multimedia flow,
if the correlation coefficient is greater than a first predefined threshold, adding the retrieved identifier to the text of the social message.

Advantageously, the invention offers a system offering seamless connections between primary multimedia device and companion device and easy interactions on the watched multimedia content: the tag is automatically provided so that getting and posting social messages on the social network channel is facilitated.

Additionally, the invention provides a unique identifier (i.e. hashtag) associated with a multimedia flow, which avoids the unmanageable plethora /multiplicity of users' generated tags to constitute a single labeled data set.

This identifier can then be used to easily link social interactions to a TV program. In the case of analysis of social interactions related to a multimedia content, it will be used to enrich knowledge about multimedia content or provide new multimedia services such as dynamic summaries or second screen applications.

In an embodiment, if the correlation coefficient is greater than a second predefined threshold and below the first predefined threshold, the user is prompted for confirmation that the social message is in relation with the retrieved official identifier before adding the retrieved official identifier to the text of the social message.

In an embodiment, social keywords are extracted from the social message written by the user as soon as the user has entered a given number of words of the social message, and the social keywords are updated for the next words written by the user.

In an embodiment, social keywords are extracted from the social message written by the user when the user has finished writing the social message and his ready to post it.

In an embodiment, the probabilistic measure is based on a cosine similarity measure between the multimedia keywords and the social keywords.

In an embodiment, the identifier of a social network thread is retrieved from the metadata associated with the multimedia flow.

In an embodiment, the identifier of a social network thread is retrieved from a server by means of an identifier of the multimedia flow included in the metadata associated with the multimedia flow.

In an embodiment, the identifier of a social network thread is a hashtag.

In an embodiment, the presence of the broadcast receiver device is detected during a device discovery process using at least one of the communication protocols among Digital Living Network Alliance protocol and Bluetooth protocol

In an embodiment, the broadcast receiver device and the social device are included in the same entity.

In an embodiment, the social device and the correlation device are included in the same entity.

The invention also pertains to a correlation device for an association of a social network message written by a user in a social device with a related multimedia flow received by a broadcast receiver device, the correlation device being able to communicate with the social device and the broadcast receiver device:
means for detecting the presence of the broadcast receiver device receiving a multimedia flow in the same location as the social device,
means for extracting social keywords from a social message written by the user,
means for requesting the broadcast receiver device for metadata about the received multimedia flow and extracting multimedia keywords from the metadata of the multimedia flow,
means for providing a correlation coefficient as a result of a probabilistic measure between the multimedia keywords and the social keywords,
means for retrieving an identifier of a social network thread associated with the multimedia flow,
means for adding the retrieved identifier to the text of the social message, if the correlation coefficient is greater than a first predefined threshold.

The invention also pertains to a computer program capable of being implemented within a device, said program comprising instructions which, when the program is executed within said device, carry out steps of the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for an association of social message with a related multimedia flow; and
- FIG. 2 is an algorithm of a method for an association of social message with a related multimedia flow according to one embodiment of the invention.

The same reference number represents the same element or the same type of element on all drawings.

### DESCRIPTION OF EMBODIMENTS

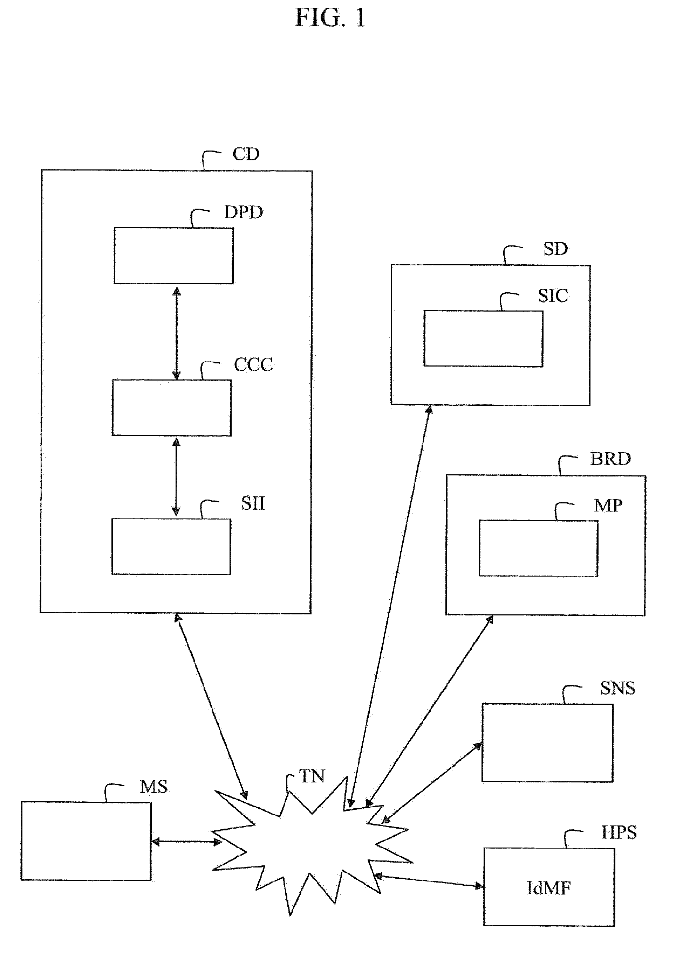

With reference to FIG. 1, a communication system according to the invention comprises a telecommunication network TN, a broadcast receiver device BRD, a social device SD, a correlation device CD, at least one multimedia server MS and at least one social network server SNS.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

As an introduction, a few terms and concepts that are helpful for understanding the invention are defined below.

A multimedia flow is provided by a multimedia server MS toward a requesting communication device through the telecommunication network TN.

A multimedia flow can be an IPTV (Internet Protocol TeleVision) stream, or may be any other kind of video stream, an audio stream, a slideshow, a text stream such as a news title stream, and the like.

The multimedia flow can be a live stream that is broadcast by the multimedia server MS and that is associated with an online or a real-time multimedia content. Alternatively, the multimedia flow can be associated with offline content like an uploaded content used by a dedicated service of the multimedia server.

A social network thread is an aggregation of essentially user posted social messages, possibly in reply to each other, and possibly with enclosed or embedded contents such as pictures, short videos, links, etc. The social network threads are stored in social network databases that are located on at least one social network server SNS forming a social network platform and are accessed via the internet.

For instance, social network threads may be annotations, like comments from a person about one element of a multimedia content, or conversations between people about a multimedia content.

The broadcast receiver device BRD is a device able to receive and display a multimedia stream.

The broadcast receiver device BRD can be a personal computer or a laptop, an electronic tablet, a smart phone, a personal digital assistant, a set-top box, a residential gateway, a game console or a connected television, for instance. More generally it concerns any type of electronic equipment comprising a communication module, capable of establishing connexion with at least one wired or wireless communication network to exchange data with other communication equipments.

The multimedia flow is composed of a multimedia content broadcast by the multimedia server MS and of metadata.

The multimedia flow is further associated with a hashtag.

More generally, it is assumed that a hashtag is an identifier of a social network thread.

The hashtag has to be unique or pseudo-unique (so that it can hardly be reproducible by mistake by humans adding additional hashtags to their social messages, in particular in another context).

In one embodiment, the hashtag is provided by the multimedia server MS. The hashtag can be generated by the multimedia server MS, for example by taking the hash code of the programme name, the channel name and the broadcast date. The hashtag can be part of the metadata of the multimedia flow.

In another embodiment, the hashtag is provided by a hashtag provider server HPS collaborating with the multimedia server MS. In this case, the correspondence between the multimedia flow and the hashtag can be done via a multimedia flow identifier IdMF.

Optionally, an official hashtag can also be displayed by the broadcast receiver device as an overlay image of the primary stream.

The broadcast receiver device BRD comprises a media player MP.

The media player MP is in charge of displaying live the content of the multimedia flow (e.g. a TV video programme) on its screen, and is able to exchange information with other devices nearby through communication means of the broadcast receiver device BRD.

The social device SD is a device able to interact with the social network server SNS.

The social device SD can be a personal computer or a laptop, an electronic tablet, a smart phone, a personal digital assistant, a set-top box, a residential gateway, a game console or a connected television, for instance. More generally it concerns any type of electronic equipment comprising a communication module, capable of establishing connexion with at least one wired or wireless communication network to exchange data with other communication equipments.

The social device SD comprises a social interaction client SIC.

The social interaction client SIC is in charge of processing a social message entered by the user. A social message is a message posted by a user on a social network thread. Such a social message could be also named a social interaction message or social network message as the purpose of such a message is interaction with other users of the social network of the user having posted the social message.

The correlation device CD can be a personal computer, a laptop, a server, an electronic tablet, a smart phone, a personal digital assistant, a set-top box, a residential gateway, a game console or a connected television, for instance. More generally it concerns any type of electronic equipment comprising a communication module, capable of establishing connexion with at least one wired or wireless communication network to exchange data with other communication equipments.

The correlation device CD comprises a social interaction interceptor SII, a device proximity detector DPD, and correlation coefficient calculator CCC.

The social interaction interceptor SII is in charge of intercepting and processing a social network message entered by the user.

The device proximity detector DPD implements a device discovery process and can handle different kinds of communication protocols, such as DLNA (Digital Living Network Alliance) or Bluetooth.

The device proximity detector DPD is able to detect the presence of another device in the same location as the communication device and to determine the kind of the detected device. The device proximity detector DPD is able to filter out non-broadcasting devices from a list of detected broadcast receiver devices (the function of each device is advertised through the protocol).

The device proximity detector DPD is also in charge of opening a communication channel between the correlation device CD and the detected broadcast receiver devices. The device proximity detector periodically detects the broadcasting device(s) available around to update the list.

In particular, in case a user owns a social device SD, such as a tablet and a broadcast receiver device BRD, such as a TV receiver, and use both of them at the same location, the device proximity detector is able to detect the broadcast receiver device BRD.

In one embodiment, the correlation device CD and the social device SD are included in the same entity. In this case, the social interaction interceptor Sil and the social interaction client SIC can be managed by a same application.

Once a communication channel is opened between the correlation device CD and the broadcast receiver device BRD, the correlation coefficient calculator CCC requests the broadcasting receiver device for metadata about the current programme displayed by this latter. These metadata include all kinds of metadata provided by the multimedia server MS and related to the current TV programme, such as genre classification, programme summary, descriptive keywords, etc.

When the user has written his social message and is ready to post it by validation, the social interaction interceptor SII calls the correlation coefficient calculator CCC, whose role is to compute the correlation of the activity between the social device SD and the broadcast receiver device(s), in order to understand if the social interaction activity refers to a multimedia flow, and to which one in case there are several broadcast receiver device(s) (e.g. a TV in different rooms on different channels).

The correlation coefficient calculator CCC provides a probabilistic measure of correlation between the social message the user is writing and metadata associated with the multimedia flow. This probabilistic measure can be based on a "*cosine*" similarity measure between a set of keywords extracted from the social message the user is writing and a set of keywords extracted from the multimedia flow metadata. Another probabilistic measure can be a similarity measure such as the Sorensen-Dice coefficient.

The correlation coefficient calculator CCC is further responsible for gathering knowledge information from raw data streams related to social network threads and multimedia flows. The correlation coefficient calculator CCC extracts vectors of keywords from the social message written by the user and from the metadata of the multimedia flow.

If there are several broadcasting devices, the probabilistic measure is done for each device and results are ranked by decreasing value, to determine to which multimedia flow the social message is more likely to refer to.

In one variant, the correlation can be computed in real time while the user is entering the social message, and be updated each time the user has entered a word.

In another variant, the correlation can be computed after that the user has entered a minimal number of words, and be updated for each next entered word.

The social interaction interceptor SII retrieves the "official" hashtag previously generated by the multimedia server MS or provided by the hashtag provider server HPS. In one variant, the social interaction interceptor SII retrieves the hashtag from a module dedicated to the generation of hashtag from the metadata associated with the broadcast multimedia flow.

If the correlation coefficient is greater than a predefined threshold, the social interaction interceptor SII automatically adds the retrieved hashtag to the text of the social message. In case of medium confidence in the value of the correlation coefficient, the user may be prompted for confirmation. The social message is then posted to the social network server SNS.

If the correlation coefficient value is too low, it is assumed that there is no link between the social message the user is writing and any of the streamed multimedia content he is watching. So no hashtag is added to the social message that is posted on the social network server SINS as such.

In one embodiment, the broadcast receiver device BRD and the social device SD are included in the same entity.

In one embodiment, the multimedia flow is not displayed on the broadcast receiver device BRD, and may be just received and recorded for example.

In another embodiment, the broadcast receiver device BRD, the social device SD and the correlation device CD are included in the same entity.

In this case, the device proximity detector DPD detects that the media player MP is launched and is receiving a multimedia flow.

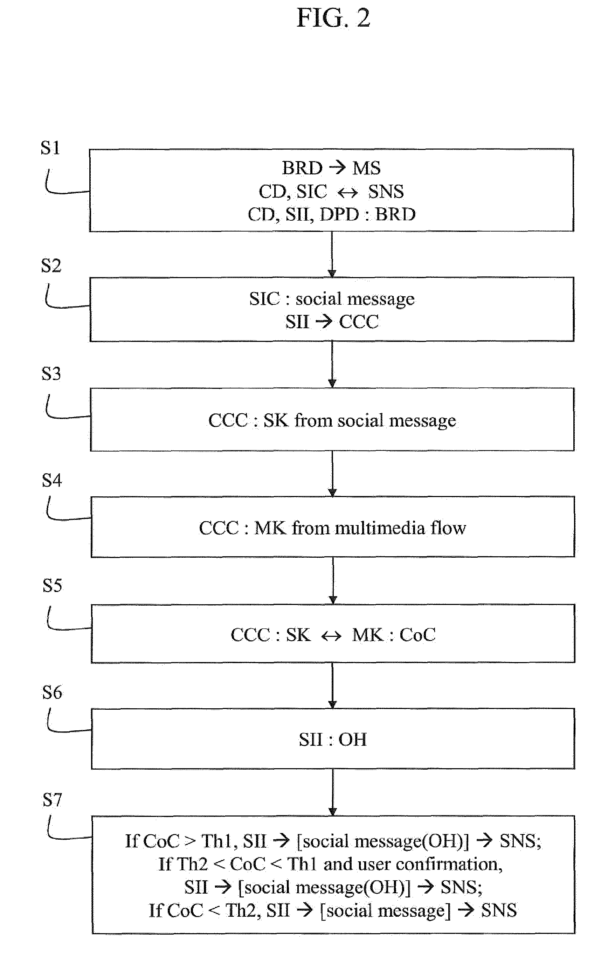

With reference to FIG. 2, a method for an association of a social network message with a related multimedia flow according to one embodiment of the invention comprises steps S1 to S7 executed within the communication system.

In step S1, the user is watching a multimedia flow on the broadcast receiver device BRD. The multimedia flow is broadcast by the multimedia server MS in association with metadata.

In one embodiment, the metadata include an official hashtag OH.

In another embodiment, an official hashtag OH is accessible from the hashtag provider server HPS, stored in correspondence with an identifier of the multimedia flow. The same identifier of the multimedia flow is included in the metadata of the multimedia flow.

The user wishes to write and post a message on a social network website, the message being related to the multimedia flow watched by the user on the broadcast receiver device BRD. To this end, the user launches the social interaction client SIC on the social device SD able to communicate with a social network server SNS.

The social interaction interceptor SII in the correlation device CD detects that the social interaction client SIC is executed and triggers the device proximity detector DPD.

The device proximity detector DPD detects the presence of the broadcast receiver device BRD receiving the multimedia flow in the same location as the social device SD.

If the device proximity detector DPD does not detect any device, it means that the user is writing a message without relation with any broadcast multimedia flow.

The device proximity detector DPD opens a communication channel with the broadcast receiver device BRD.

When the device proximity detector DPD detects the presence of the broadcast receiver device BRD in the same location as the social device SD, it means that the broadcast receiver device BRD and the social device SD are in the same room or in adjoining rooms, the user being able to see both the broadcast receiver device BRD and the social device SD.

In step S2, the user writes a social message. When the user has finished writing the social message and is ready to post it, for example by clicking on a "Send" type button or pushing a "Return" type keystroke, the social interaction interceptor SII calls the correlation coefficient calculator CCC.

In step S3, the correlation coefficient calculator CCC extracts a list of social keywords SK from the social message written by the user.

In step S4, the correlation coefficient calculator CCC requests the broadcasting receiver device for metadata about the current broadcast multimedia flow. For example, metadata include genre classification, programme summary, descriptive keywords, etc.

The correlation coefficient calculator CCC extracts a list of multimedia keywords. MK from the metadata of the multimedia flow.

In one embodiment, order of steps S3 and S4 can be interchanged.

In step S5, the correlation coefficient calculator CCC provides a probabilistic measure of correlation between the social message the user is writing and metadata associated with the multimedia flow. For example, the probabilistic measure is based on a "*cosine*" similarity measure between the multimedia keywords MK and the social keywords SK.

The correlation coefficient calculator CCC provides a correlation coefficient CoC as a result of the probabilistic measure.

In one variant, the correlation is provided by the correlation coefficient calculator CCC in real time while the user is entering the social message, as soon as the user is entering a word, and is updated each time the user has entered a word.

In this case, in steps S2, S3, the correlation coefficient calculator CCC is called by the social interaction interceptor SII as soon as the user has entered a word of the social message. The correlation coefficient calculator CCC extracts and updates a list of social keywords SK from the next words written by the user.

In another variant, the correlation is provided by the correlation coefficient calculator CCC in real time while the user is entering the social message, after that the user has entered a minimal number of words, and is updated each time the user has entered a word.

In this case, in steps S2, S3, the correlation coefficient calculator CCC is called by the social interaction interceptor SII as soon as the user has entered a given number of words of the social message, and extracts and updates a list of social keywords SK from the next words written by the user.

In step S6, the social interaction interceptor SII retrieves the official hashtag OH associated with the broadcast multimedia flow provided by the multimedia server MS.

In one embodiment, the official hashtag OH is retrieved from the metadata associated with the broadcast multimedia flow and transmitted by the media player MP of the broadcast receiver device BRD through the communication channel.

In another embodiment, the official hashtag OH is retrieved from the hashtag provider server HPS by means of the identifier of the multimedia flow included in the metadata associated with the broadcast multimedia flow.

In another embodiment, the social interaction interceptor SII retrieves the hashtag from a module that has generated the hashtag from the metadata associated with the broadcast multimedia flow. The hashtag can be generated by the same manner as hashtag generated by the multimedia server MS, for example from the combination of hash code of the programme name, the channel name and the broadcast date. By this way, all entities (the correlation device, the multimedia server and the hashtag provider server) generate the same and unique hashtag for the same multimedia flow.

In step S7, if the correlation coefficient CoC is greater than a first predefined threshold Th1, the social interaction interceptor SII automatically adds the retrieved official hashtag OH to the text of the social message written by the user. The social message is then posted to the social network server SNS with the official hashtag OH.

If the correlation coefficient is greater than a second predefined threshold Th2 and below the first predefined threshold Th1, which means a medium confidence in the value of the correlation coefficient, the user is prompted for confirmation that the written message is in relation with the official hashtag. The social interaction interceptor SII adds the official hashtag OH after confirmation by the user. The social message is then posted to the social network server SNS with the official hashtag OH.

If the correlation coefficient is below the second predefined threshold Th2, it is assumed that there is no link between the social message the user has written and the broadcast multimedia flow he is watching. The social message is then posted to the social network server SNS without the official hashtag OH. Another hashtag can be used for this social message.

In one variant, when the correlation is provided by the correlation coefficient calculator CCC in real time while the user is entering the social message, if the correlation coefficient is greater than at least the second predefined threshold Th2, the social interaction interceptor SII suggests to the user to add the official hashtag OH the written message, for example by displaying the official hashtag.

The invention described here relates to a method and a device for an association of a social network message with a related multimedia flow. According to one implementation of the invention, the steps of the invention are determined by the instructions of a computer program incorporated into a device, such as the communication device CD. The program comprises program instructions which, when said program is loaded and executed within the device, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for an association of a social network message written by a user in a social device (SD) with a related multimedia flow received by a broadcast receiver device (BRD), comprising the following steps in a correlation device (CD) able to communicate with the social device and the broadcast receiver device:
detecting (S1) the presence of the broadcast receiver device (BRD) receiving a multimedia flow in the same location as the social device (SD),
extracting (S3) social keywords (SK) from a social message written by the user,
requesting (S4) the broadcast receiver device (BRD) for metadata about the received multimedia flow and extracting multimedia keywords (MK) from the metadata of the multimedia flow,
providing (S5) a correlation coefficient (CoC) as a result of a probabilistic measure between the multimedia keywords (MK) and the social keywords (SK),
retrieving (S6) an identifier (OH) of a social network thread associated with the multimedia flow,
if the correlation coefficient (CoC) is greater than a first predefined threshold (Th1), adding (S7) the retrieved identifier to the text of the social message.

2. A method according to claim 1, wherein, if the correlation coefficient is greater than a second predefined threshold (Th2) and below the first predefined threshold (Th1), the user is prompted for confirmation that the social message is in relation with the retrieved official identifier before adding the retrieved official identifier to the text of the social message.

3. A method according to claim 1 or 2, wherein social keywords (SK) are extracted from the social message written by the user as soon as the user has entered a given number of words of the social message, and the social keywords (SK) are updated for the next words written by the user.

4. A method according to claim 1 or 2, wherein social keywords (SK) are extracted from the social message written by the user when the user has finished writing the social message and his ready to post it.

5. A method according to any of claims 1 to 4, wherein the probabilistic measure is based on a similarity measure between the multimedia keywords and the social keywords.

6. A method according to claim 5, wherein the similarity measure is a cosine similarity measure.

7. A method according to any of claims 1 to 6, wherein the identifier (OH) of a social network thread is retrieved from the metadata associated with the multimedia flow.

8. A method according to any of claim 1 to 6, wherein the identifier (OH) of a social network thread is retrieved from a server (HPS) by means of an identifier of the multimedia flow included in the metadata associated with the multimedia flow.

9. A method according to any of claims 1 to 6, wherein the identifier (OH) of a social network thread is retrieved from a module that has generated said identifier from the metadata associated with the broadcast multimedia flow.

10. A method according to any of claims 1 to 9, wherein the identifier (OH) of a social network thread is a hashtag.

11. A method according to any of claims 1 to 10, wherein the presence of the broadcast receiver device (BRD) is detected during a device discovery process using at least one of the communication protocols among Digital Living Network Alliance protocol and Bluetooth protocol.

12. A method according to any of claims 1 to 11, wherein the broadcast receiver device (BRD) and the social device (SD) are included in the same entity.

13. A method according to any of claims 1 to 12, wherein the social device (SD) and the correlation device (CD) are included in the same entity.

14. A correlation device (CD) for an association of a social network message written by a user in a social device (SD) with a related multimedia flow received by a broadcast receiver device (BRD), the correlation device (CD) being able to communicate with the social device and the broadcast receiver device:
means (DPD) for detecting the presence of the broadcast receiver device (BRD) receiving a multimedia flow in the same location as the social device (SD),
means (DPD) for extracting social keywords (SK) from a social message written by the user,
means (CCC) for requesting the broadcast receiver device (BRD) for metadata about the received multimedia flow and extracting multimedia keywords (MK) from the metadata of the multimedia flow,
means (CCC) for providing a correlation coefficient (CoC) as a result of a probabilistic measure between the multimedia keywords (MK) and the social keywords (SK),
means (SII) for retrieving an identifier (OH) of a social network thread associated with the multimedia flow,
means (CCC) for adding the retrieved identifier to the text of the social message, if the correlation coefficient (CoC) is greater than a first predefined threshold (Th1).

15. A computer program capable of being implemented within a correlation device (CD) for an association of a social network message written by a user in a social device (SD) with a related multimedia flow received by a broadcast receiver device (BRD), the correlation device (CD) being able to communicate with the social device and the broadcast receiver device, said program comprising instructions which, when the program is loaded and executed within said device, carry out the following steps:
detecting (S1) the presence of the broadcast receiver device (BRD) receiving a multimedia flow in the same location as the social device (SD),
extracting (S3) social keywords (SK) from a social message written by the user,
requesting (S4) the broadcast receiver device (BRD) for metadata about the received multimedia flow and extracting multimedia keywords (MK) from the metadata of the multimedia flow,
providing (S5) a correlation coefficient (CoC) as a result of a probabilistic measure between the multimedia keywords (MK) and the social keywords (SK),
retrieving (S6) an identifier (OH) of a social network thread associated with the multimedia flow,
if the correlation coefficient (CoC) is greater than a first predefined threshold (Th1), adding (S7) the retrieved identifier to the text of the social message.
